# EUROPEAN PATENT APPLICATION

(11) **EP 2 781 728 A2**
(43) Date of publication of application: **24.09.2014**
(21) Application number: 14159512.4
(22) Date of filing: 13.03.2014
(51) Int. Cl.: F02K 1/56, F02K 1/82

(54) **Thrust reverser inner fixed structure with corner fitting**

(30) Priority: 18.03.2013 US 201361803048 P; 17.10.2013 US 201314056695
(71) Applicant: Rohr, Inc., Chula Vista, CA 91910-2098 (US)
(72) Inventor: Olson, Timothy, La Jolla, CA California 92037 (US); Cobia, Jay R., Kyle, TX Texas 78640 (US); Sommer, Thomas, San Diego, CA California 92124-4028 (US)
(74) Representative: Hull, James Edward

(57) **Abstract**

A method is provided for providing, e.g. manufacturing, a thrust reverser inner fixed structure (602). The method includes providing an acoustic inner barrel (602) that includes a first honeycomb core (604) and an annular inner skin (630) radially inward of the first honeycomb core (604), providing a bifurcation panel (606) that includes a second honeycomb core (608) and arranging a corner fitting (610) between and attaching the corner fitting (610) to the acoustic inner barrel (602) and the bifurcation panel (606).

## Description

### 1. Field of Technology

The invention relates to the field of protective systems for aircraft propulsion system components and in particular, to a liquid interface diffusion (LID) bonded titanium inner fixed structure (IFS) with bonded-in corner fitting for an aircraft engine nacelle system.

### 2. Related Art

A nacelle system is the aerodynamic structure that surrounds an aircraft engine. It includes parts commonly referred to as engine cowling, but the nacelle system typically includes other components as well including the inlet cowl, fan cowl, thrust reverser, core cowl and nozzle.

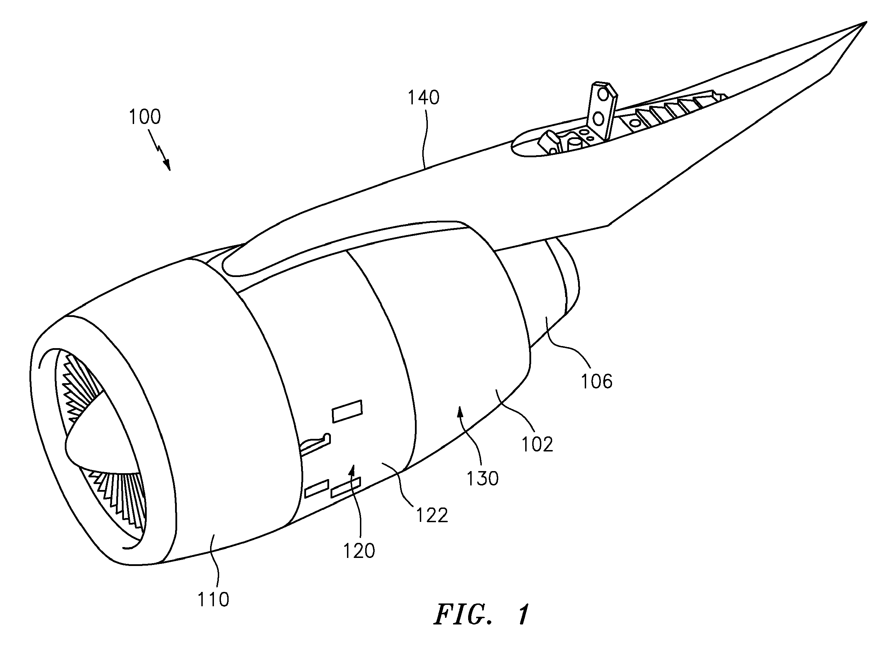

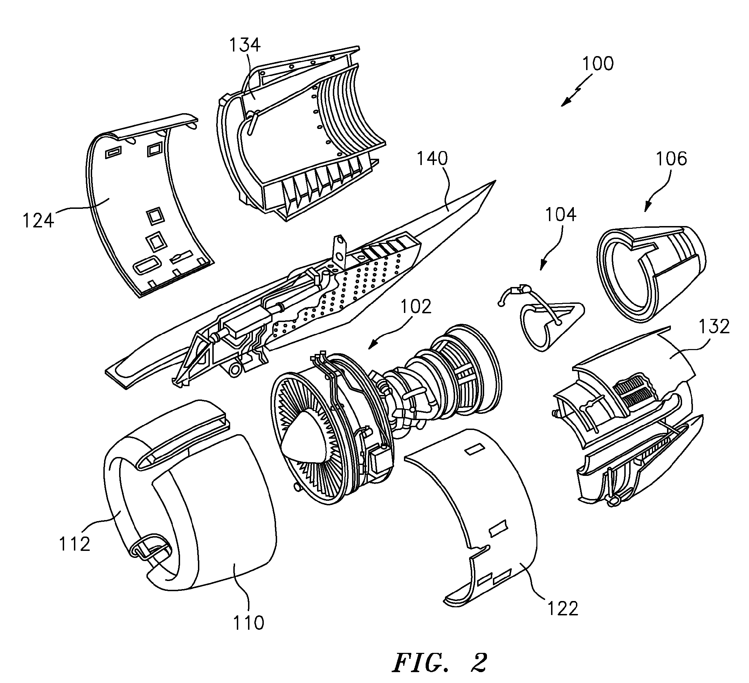

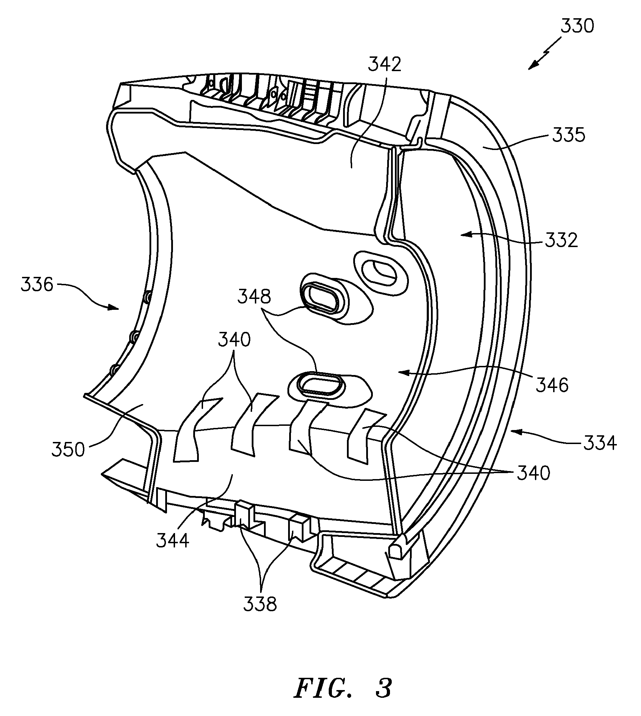

FIG. 1 illustrates an assembled, complete aircraft propulsion assembly 100, and FIG. 2 shows an exploded view of the aircraft propulsion assembly 100 of FIG. 1. Referring to FIGs. 1 and 2, components of the aircraft propulsion system include an engine assembly 102 at the tail end of which are an exhaust cone 104 and an exhaust nozzle 106. The forward end of the engine assembly 102 includes a nacelle inlet 110 having a nacelle inlet lip 112. Aft of the nacelle inlet 110 is a fan cowl 120 comprising fan cowl halves 122, 124. A thrust reverser 130 comprising thrust reverser halves 132, 134 is aft of the fan cowl 120. A pylon/strut assembly 140 connects the aforementioned component to a wing of an aircraft. The thrust reverser 130 includes an outer fixed structure, a translating sleeve, and an inner fixed structure as shown in FIG. 3.

FIG. 3 shows thrust reverser half 330 which exposes a one half section 332 of an inner fixed structure (IFS) formed in two "clam-shell" halves, only one clam-shell half being shown. It is understood that the unseen second section is essentially a mirror image of the section 332. The IFS section has a forward end 334 with an exterior surface 335 that faces in the direction of the engine and fan cowl, and an aft end 336 with an exterior surface (not shown) that faces in the direction of the exhaust nozzle. The IFS halves 332 are connected together by latches 338 at the bottom and hinged to the pylon 140 (FIG. 2) at the top. Bumpers 340 provide a structural bridge between the gaps that separates the two IFS halves 332. The structural bridge provides a hoop load path to resist the crushing pressure of the fan air stream upon the barrel sections and bifurcations.

The inner fixed structure illustrated in FIG. 3 encases portions of the engine assembly located between the engine fan case and the nozzle. The inner fixed structure is configured to create an aerodynamically smooth path for air, and a fire and heat boundary by enclosing portions of the engine assembly.

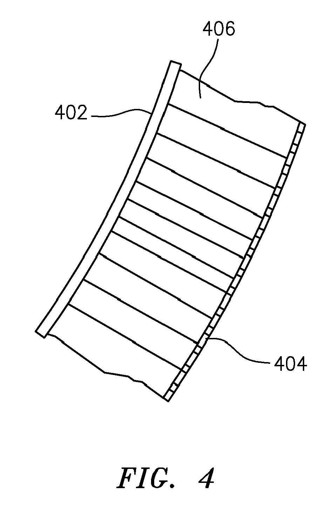

The inner fixed structure section 332 is a one-piece honeycomb sandwich comprising an inner skin, an outer skin and a cellular core between the inner and outer skins, all bonded together. Referring to FIG. 4, the honeycomb sandwich is typically an acoustic structure with an imperforate annular inner skin 402, a perforated annular outer skin 404, and a cellular core 406 suitable for use in acoustic applications. The inner skin 402 may be formed from a metallic or a graphite composite material (e.g., carbon fiber); the outer skin may also be formed from a metallic or graphite composite material; and the cellular core 406 may be formed from a graphite composite material.

Referring again to FIG. 3, the inner fixed structure section 332 has an upper bifurcation wall portion 342, a lower bifurcation wall portion 344 and inner acoustic barrel portion 346 formed between the two wall portions 342, 344. The honeycomb sandwich is acoustic wherever possible to control noise, but is interrupted by a number of structures and formations such as cooling holes 348, the bumpers 340, the latches 338, mounting members and the like.

Aft of its forward end where it interfaces with the fan section, the diameter of the inner acoustic barrel portion 346 increases to form an enlarged barrel portion 350 of suitable size and shape to enclose the rear engine mounts and the turbine section of the engine. The inner acoustic barrel portion 346 then decreases in diameter to wrap around the forward portion of the exhaust nozzle 106 (FIG. 2).

Acoustic treatment of an inner fixed structure is always at a premium because of the large number of openings and attachments.

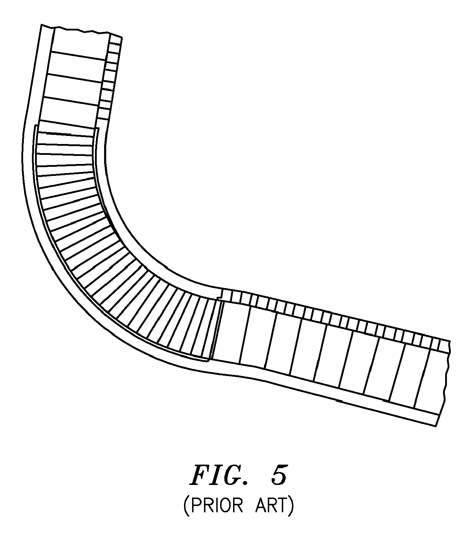

One potential opportunity for increasing acoustic treatment [area] is at the corner joints between the barrel 346 and the bifurcations 342, 344. This is generally achieved by using a high density core to form the corner piece. However, the high density core cannot be formed to a tight radius, nor is it suitable for acoustic treatment (the cells are too close together). Consequently, a lot of potential acoustic area is lost, as shown in FIG. 5.

In conventional inner fixed structures with graphite-epoxy (GR-EP) skins, a high density core is placed in the corner with doubler plies added to both skins in this zone to assure structural integrity in this highly loaded area. The core density and the doubler plies render this construction not suitable for acoustic treatment. In addition, the graphite-epoxy high density core must be thermally protected against high engine core temperatures and thus IFSs normally require insulation blankets.

There is a need for an inner fixed structure which increases the acoustic treatment for noise suppression in comers/joints of the inner fixed structure between the barrel and the bifurcations.

### SUMMARY OF THE INVENTION

According to an aspect of the invention, a thrust reverser inner fixed structure comprises an acoustic inner barrel, a first bifurcation panel that includes a bifurcation panel honeycomb core disposed between panel inner and outer skins, and a corner fitting, wherein the corner fitting is liquid interface diffusion (LID) bonded to the acoustic inner barrel and the first bifurcation panel.

According to another aspect of the invention, a thrust reverser inner fixed structure comprises an acoustic inner barrel that comprises a barrel honeycomb core having an annular interior skin radially inward of the first honeycomb core, a first bifurcation panel, and a corner fitting, wherein the corner fitting is LID bonded to the acoustic inner barrel and the first bifurcation panel.

According to another aspect of the invention, a thrust reverser inner fixed structure comprises an acoustic inner barrel that includes a barrel honeycomb core having an annular interior skin radially inward of the first honeycomb core, a first bifurcation panel that includes a bifurcation panel honeycomb core disposed between panel inner and outer skins, and a corner fitting, wherein the corner fitting is LID bonded to the acoustic inner barrel and the first bifurcation panel.

According to another aspect of the invention, a method is provided for providing a thrust reverser inner fixed structure. The method includes (a) providing an acoustic inner barrel that includes a first honeycomb core and an annular inner skin radially inward of the first honeycomb core; (b) providing a bifurcation panel that includes a second honeycomb core; and (c) arranging a corner fitting between and attaching the corner fitting to the acoustic inner barrel and the bifurcation panel.

According to a further aspect of the invention, another method is provided for providing a thrust reverser inner fixed structure. The method includes (a) forming an acoustic inner barrel that includes a first honeycomb core; (b) forming a bifurcation panel that includes a second honeycomb core; (c) forming a corner fitting independent of the acoustic inner barrel and the bifurcation panel; and (d) connecting the acoustic inner barrel to the bifurcation panel with the corner fitting.

In any of the above aspects or embodiments, the corner fitting may be titanium. The barrel honeycomb core may also or alternatively include a titanium annular inner skin and/or a titanium honeycomb acoustic core. The bifurcation panel may also or alternatively include a titanium skin and/or a titanium honeycomb acoustic core.

In any of the above aspects or embodiments, the titanium honeycomb core may be formed, for example, by super plastic formation (SPF) processing or 360° SPF processing.

In any of the above aspects or embodiments, the corner fitting may include a first set of flanges that form a first channel, and/or a second set of flanges that form a second channel. An end surface/face skin of the bifurcation panel may be LID bonded or otherwise attached to the first set of flanges, and the end surface/face skin of the barrel may be LID bonded or otherwise attached to the second set of flanges.

In any of the above aspects or embodiments, the corner fitting may be attached to the acoustic inner barrel and/or the bifurcation panel by liquid interface diffusion (LID) bonding. The corner fitting may also or alternatively be attached to the acoustic inner barrel and/or the bifurcation panel by an adhesive. The corner fitting may also or alternatively be attached to the acoustic inner barrel and/or the bifurcation panel by one or more mechanical fasteners.

In any of the above aspects or embodiments, a portion of the corner fitting may be inserted into a channel in the acoustic inner barrel. A portion of the corner fitting may also or alternatively be inserted into a channel in the bifurcation panel. A portion of the acoustic inner barrel may also or alternatively be inserted into a channel in the corner fitting. A portion of the bifurcation panel may also or alternatively be inserted into a channel in the corner fitting.

In any of the above aspects or embodiments, the corner fitting may be formed discretely from the acoustic inner barrel and/or the bifurcation panel.

In any of the above aspects or embodiments, the corner fitting may be formed by one or more of the following processes: casting and/or machining.

The foregoing features and the operation of the invention will become more apparent in light of the following description and the accompanying drawings.

### DESCRIPTION OF THE DRAWINGS

FIG. 1 illustrates an assembled, complete aircraft propulsion assembly;
FIG. 2 shows an exploded view of the aircraft propulsion assembly;
FIG. 3 shows a thrust reverser half which exposes a one half section of an inner fixed structure (IFS) formed in two "clam-shell" halves;
FIG. 4. illustrates a honeycomb sandwich comprising an inner skin, an outer skin and a cellular core between the inner and outer skin panels;
FIG. 5 is a more detailed illustration of a prior art non-acoustic corner between the inner acoustic barrel and the bifurcation panel;
FIG. 6 illustrates a thrust reverser inner fixed structure component comprising an acoustic inner barrel that comprises a honeycomb core, a first bifurcation panel that includes a honeycomb core, and a corner fitting, wherein the corner fitting is LID bonded to the acoustic inner barrel and the first bifurcation panel;
FIG. 7 is a pictorial illustration of an embodiment of the corner fitting;
FIG. 8 is an isometric view of the embodiment of the corner fitting, along with a cross sectional illustration of the embodiment of the corner fitting;
FIG. 9 is a side sectional illustration of the corner fitting overlaid on a curved portion of an acoustic sandwich panel;
FIG. 10 is a side sectional illustration of a corner fitting connecting an acoustic inner barrel with a bifurcation panel;
FIG. 11 is a side sectional illustration of another corner fitting connecting an acoustic inner barrel with a bifurcation panel;
FIG. 12 is a side sectional illustration of another corner fitting connecting an acoustic inner barrel with a bifurcation panel;
FIG. 13 is a pictorial illustration of the barrel with the honeycomb core exposed (i.e., the annular inner skin removed), and the corner fitting; and
FIG. 14 is a pictorial illustration of the barrel with annular inner skin of the acoustic inner barrel covering the honeycomb core, and the barrel joined to the corner fitting.

### DETAILED DESCRIPTION OF THE INVENTION

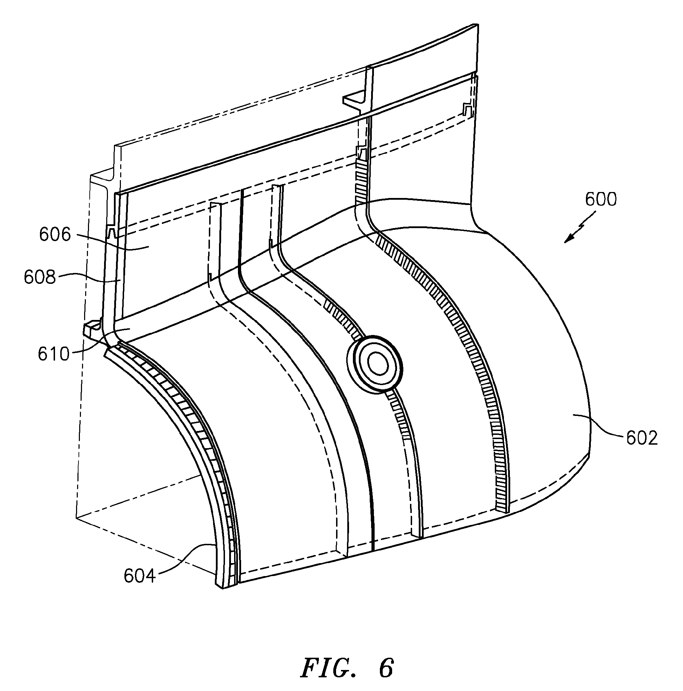

FIG. 6 illustrates a thrust reverser inner fixed structure component 600 comprising an acoustic inner barrel 602 that includes a barrel honeycomb core 604, a first bifurcation panel 606 that includes a bifurcation panel honeycomb core 608, and a corner fitting 610. This corner fitting 610 is attached to the barrel 602 and/or the first bifurcation panel 606. The corner fitting 610, for example, may be liquid interface diffusion (LID) bonded and/or otherwise attached to the barrel 602 and the first bifurcation panel 606. LID bonding combines the attributes of brazing and diffusion bonding to attain near-base metal properties in a bonded sandwich panel. The result is a lightweight component that can stand up to harsh exhaust environments.

The barrel honeycomb core 604, the bifurcation panel honeycomb core 608 or both the barrel honeycomb core 604 and the bifurcation panel honeycomb core 608 may each be discretely formed from titanium. For example, the barrel 602 may include one or more titanium skins and a titanium honeycomb acoustic core (or equivalent material) between the skins, so as not to require thermal insulation to protect the structure. It is contemplated that the bifurcation panel 606 may be of a similar construction or of dissimilar materials (such as GR-EP) and/or constructions, if they are suitably isolated or insulated from engine core heat.

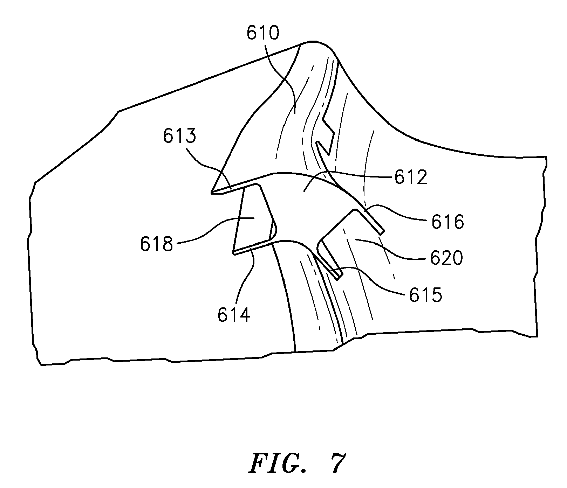

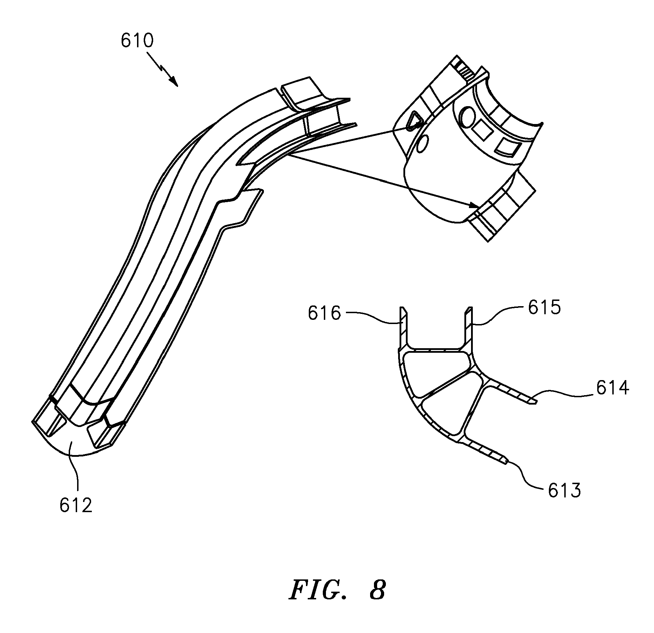

FIG. 7 is a pictorial illustration of the corner fitting 610. The corner fitting 610 is preferably a titanium component that may, for example, be a machined casting or machined. The corner fitting 610 includes a web 612 and a plurality of flanges 613-616 that form first and second channels 618, 620. FIG. 8 is an isometric view of the embodiment of the corner fitting 610, along with a cross sectional illustration of the embodiment of the corner fitting 610.

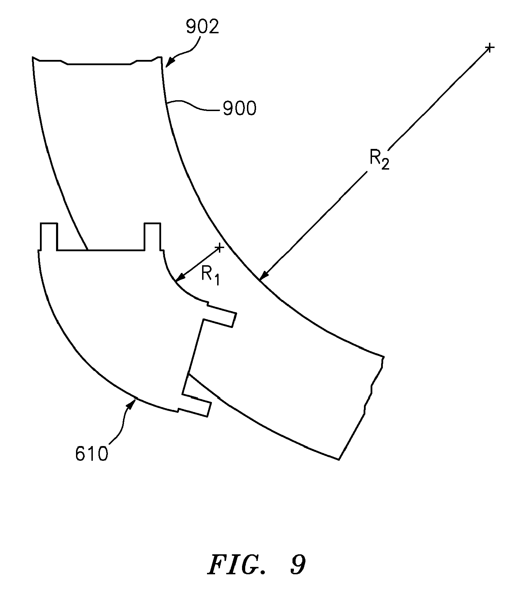

FIG. 9 is a side sectional illustration of the corner fitting 610 overlaid on a curved portion 900 of an acoustic sandwich panel 902. Since the corner fitting 610 may be cast and/or machined as described above, an inner radius R₁ of the corner fitting 610 may be (e.g., about six times) smaller than an inner radius R₂ of the curved portion 900, which is intended to represent a minimum radius the panel 902 may be bent without crushing and/or otherwise losing structural integrity of its honeycomb core. It is worth noting that a curved portion of an acoustic sandwich panel such as the portion 900 is typically ineffective for noise attenuation. However, the relatively small radius R₁ of the corner fitting 610 enables the acoustic inner barrel 602 and/or the bifurcation panel 606 (see FIG. 6) to be enlarged, which may increase their effective area for noise attenuation.

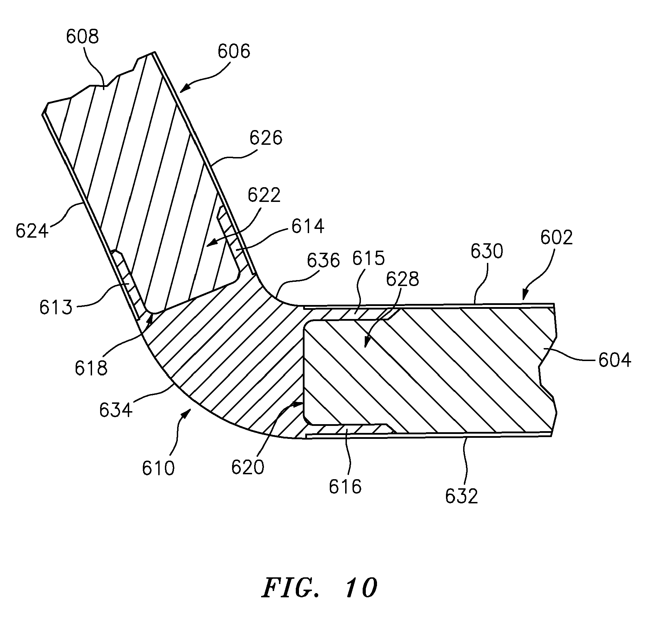

Referring to FIG. 10, the bifurcation panel 606 is mated and attached to the corner fitting 610. An end portion 622 of the core 608 of FIG. 10, for example, is inserted into the channel 618. First and/or second skins 624 and 626 of the bifurcation panel 606 are respectively LID bonded to the flanges 613 and 614. The first and/or the second skins 624 and 626 may also or alternatively be bonded to the flanges 613 and 614 using one or more techniques other than LID bonding such as, for example, welding, brazing and/or adhering with an adhesive (e.g., epoxy). In addition, the first and/or the second skins 624 and 626 may also or alternatively be mechanically attached to the flanges 613 and 614 using one or more rivets, screws, bolts or any other type of mechanical fasteners.

The acoustic inner barrel 602 is also mated and attached to the corner fitting 610. An end portion 628 of the core 604 of FIG. 10, for example, is inserted into the channel 620. First and/or second skins 630 and 632 of the barrel 602 are respectively LID bonded to the flanges 615 and 616. The first and/or the second skins 630 and 632 may also or alternatively be bonded to the flanges 615 and 616 using one or more techniques other than LID bonding such as, for example, welding, brazing and/or adhering with an adhesive (e.g., epoxy). In addition, the first and/or the second skins 630 and 632 may also or alternatively be mechanically attached to the flanges 615 and 616 using one or more rivets, screws, bolts or any other type of mechanical fasteners.

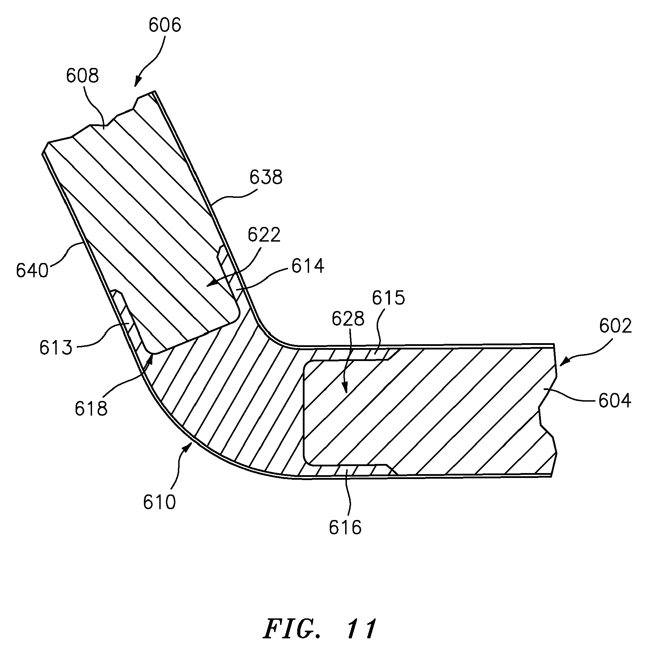

With the interface described above and illustrated in FIG. 10, a portion 634 of a surface of the corner fitting 610 between the skins 624 and 632 is left exposed. A portion 636 of an opposite surface of the corner fitting 610 between the skins 626 and 630 is also left exposed. However, in other embodiments such as that illustrated in FIG. 11, the acoustic inner barrel 602 and bifurcation panel 606 may share one or more skins 638 and 640. Each of these shared skins 638 and 640 respectively overlaps and is attached to the corner fitting 610. In this manner, the corner fitting 610 provides a structural core at the corner joint between the barrel 602 and the panel 606.

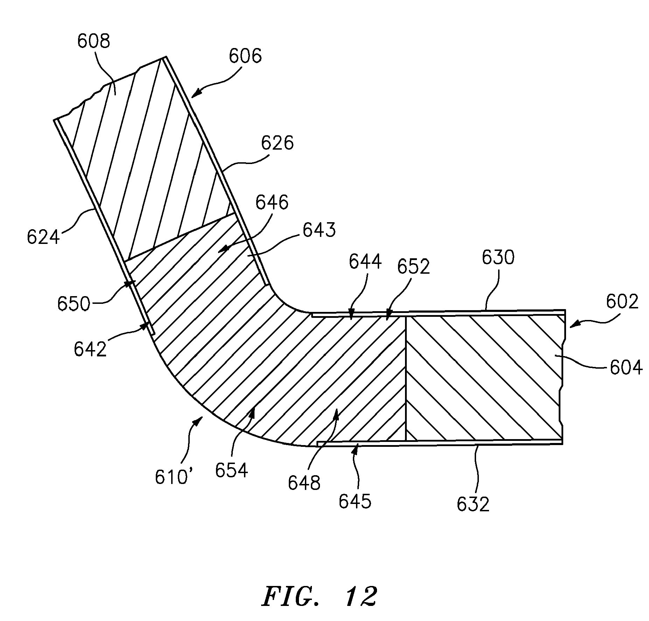

FIG. 12 illustrates an alternate embodiment corner fitting 610' for connecting the acoustic inner barrel 602 to the bifurcation panel 606. In contrast to the corner fitting 610 of FIG. 10, the corner fitting 610' is configured having a plurality of recesses 642-645 rather than the flanges 613-616. End portions 646 and 648 of the corner fitting 610', which form the recesses 642-645, respectively extend into channels 650 and 652 of the barrel 602 and the panel 606. The skins 624, 626 and 630, 632, which may form the channels 650 and 652, respectively overlap the end portions 646 and 648 and are seated within the recesses 642-645. One or more of the skins 624, 626, 630 and 632 are respectively attached (e.g., LID bonded) to the end portions 646 and 648 and/or a central portion 654 of the corner fitting 610'.

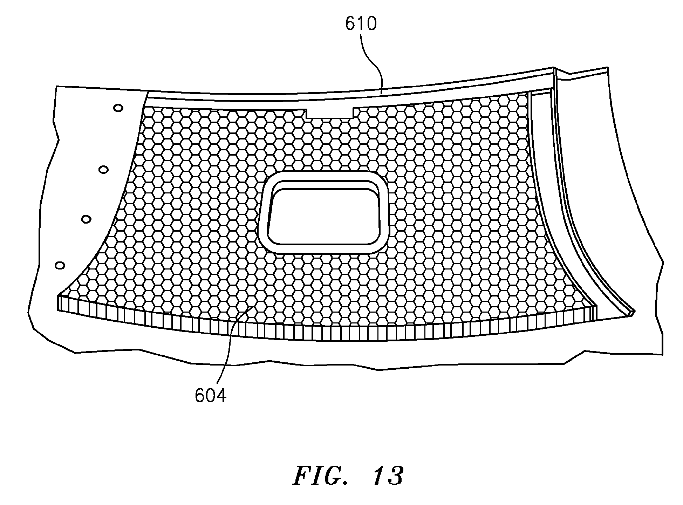

FIG. 13 is a pictorial illustration of the honeycomb core 604 of the acoustic inner barrel 602, and the corner fitting 610. The honeycomb core may be formed from titanium.

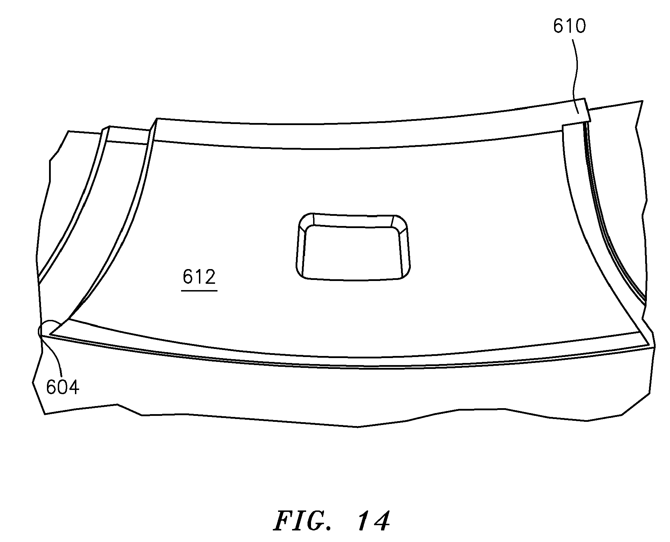

FIG. 14 is a pictorial illustration of annular inner skin 612 of the acoustic inner barrel covering the honeycomb core 604, and the barrel joined to the corner fitting 610.

One titanium manufacturing option is the use of 360° SPF process, which enables the forming of axis symmetric-skins. These may then be LID bonded into core cowl structures. Cowls would subsequently be trimmed into two or three high temperature sections to contain engine core heat. A primary advantage will be that this allows the now thermally isolated bifurcation structures to be manufactured of lighter/ cheaper materials.

A thrust reverser inner fixed structure component according to aspect of the present invention provides a blanket-less IFS structure that can withstand elevated engine core temperatures without the need for an insulating blanket.

Although titanium is a preferred metal for the corner fitting, the first honeycomb core and the annular skins of the acoustic inner barrel, as well as the honeycomb core of the bifurcation panel and its annular skins, it is contemplated that one or more of these elements may be formed from metals such as, for example, aluminum or inconel. If aluminum is used, then an insulting blanket may be provided to protect against elevated engine core temperatures. It is also contemplated that one or more of the skins and/or other elements may be formed from a composite material such as carbon fiber. For example, the barrel 602 and the corner fitting 610 may be formed from metal and LID bonded together, whereas one or more of the bifurcation panel skins may be formed from a composite and adhered and/or mechanically attached to the corner fitting 610, or vice versa.

While various embodiments of the present invention have been disclosed, it will be apparent to those of ordinary skill in the art that many more embodiments and implementations are possible within the scope of the invention. For example, the corner fitting and the acoustic inner barrel may interface in the manner shown in FIG. 10 whereas the corner fitting and the bifurcation panel may interface in the manner shown in FIG. 12, or vice versa. In another example, one or more of the skins may be attached to the corner fitting in a different manner than one or more of the skins. Accordingly, the present invention is not to be restricted except in light of the associated claims and their equivalents.

## Claims

1. A method for providing a thrust reverser inner fixed structure (600), the method comprising:
providing an acoustic inner barrel (602) that includes a first honeycomb core (604) and an annular inner skin (630) radially inward of the first honeycomb core (604);
providing a bifurcation panel (606) that includes a second honeycomb core (608); and
arranging a corner fitting (610, 610') between and attaching the corner fitting (610, 610') to the acoustic inner barrel (602) and the bifurcation panel (606).

2. The method of claim 1, wherein the corner fitting (610, 610') is attached to the acoustic inner barrel (602) and/or the bifurcation panel (606) by liquid interface diffusion (LID) bonding.

3. The method of claim 1 or 2, wherein the corner fitting (610, 610') is attached to the acoustic inner barrel (602) and/or the bifurcation panel (606) by an adhesive.

4. The method of any of claims 1 to 3, wherein the corner fitting (610, 610') is attached to the acoustic inner barrel (602) and/or the bifurcation panel (606) by one or more mechanical fasteners.

5. The method of any preceding claim, wherein the annular inner skin (630) comprises titanium.

6. The method of any preceding claim, wherein the first honeycomb core (604) comprises titanium.

7. The method of any of claims 1 to 5, wherein the second honeycomb core (608) comprises titanium.

8. The method of any of claims 1 to 4, wherein the first honeycomb core (604) and the second honeycomb core (608) each comprises titanium.

9. The method of any preceding claim, wherein the annular inner skin (630), the first honeycomb core (604) and the second honeycomb core (608) each comprises titanium.

10. The method of any preceding claim, further comprising inserting a portion (646, 648) of the corner fitting (610') into a channel (646, 648) in the acoustic inner barrel (602) or the bifurcation panel (606).

11. The method of any of claims 1 to 9, further comprising inserting a portion (628) of the acoustic inner barrel (602) into a channel (620) in the corner fitting (610).

12. The method of any of claims 1 to 9 or 11, further comprising inserting a portion (622) of the bifurcation panel (606) into a channel (618) in the corner fitting (610).

13. The method of any preceding claim, further comprising forming the corner fitting (610, 610') discretely from the acoustic inner barrel (602) and the bifurcation panel (606).

14. The method of any preceding claim, further comprising forming the corner fitting (610, 610') using casting and/or machining.

15. A method for providing a thrust reverser inner fixed structure (600), the method comprising:
forming an acoustic inner barrel (602) that includes a first honeycomb core (604);
forming a bifurcation panel (606) that includes a second honeycomb core (608);
forming a corner fitting (610, 610') independent of the acoustic inner barrel (602) and the bifurcation panel (606); and
connecting the acoustic inner barrel (602) to the bifurcation panel (606) with the corn$er fitting (610, 610').
